# DEMANDE DE BREVET EUROPEEN

(11) **EP 1 743 830 A1**
(43) Date de publication de la demande: **17.01.2007**
(21) Numéro de dépôt: 06291089.8
(22) Date de dépôt: 03.07.2006
(51) Int. Cl.: B62J 6/02

(54) **Système d'éclairage notamment pour bicyclette**

(30) Priorité: 11.07.2005 FR 0507400
(71) Demandeur: Basta France, 58500 Clamecy (FR)
(72) Inventeur: Carlin, Jean-François, 49800 Trelaze (FR)
(74) Mandataire: Habasque, Etienne J. Jean-François

(57) **Abrégé**

Ce système d'éclairage notamment pour bicyclette, du type comportant des moyens de fixation (2) sur la bicyclette, des moyens formant réflecteur (3) déplaçables angulairement par rapport aux moyens de fixation (2) et des moyens d'éclairage disposés dans les moyens formant réflecteur (3), est caractérisé en ce que les moyens d'éclairage sont portés par les moyens de fixation (2) et en ce que les moyens formant réflecteur (3) sont déplaçables par rapport à ces moyens d'éclairage.

## Description

La présente invention concerne un système d'éclairage notamment pour bicyclette.

Plus particulièrement, l'invention se rapporte à un tel système d'éclairage qui comporte des moyens de fixation sur la bicyclette, des moyens formant réflecteur déplaçables angulairement par rapport aux moyens de fixation et des moyens d'éclairage disposés dans les moyens formant réflecteur.

Les moyens de fixation comprennent par exemple un bras de support dont une première extrémité comporte des moyens d'accrochage sur la bicyclette, et dont une seconde extrémité comporte des moyens d'articulation adaptés pour coopérer avec des moyens complémentaires des moyens formant réflecteur, pour permettre un réglage en position du réflecteur par rapport au bras de support.

Ce réflecteur est également muni d'un culot de réception par exemple d'une ampoule électrique.

L'alimentation de cette ampoule est alors assurée par exemple soit par des moyens de stockage d'énergie tels que des piles ou autres, soit par une dynamo de la bicyclette.

Dans ce cas, des conducteurs électriques s'étendent alors entre le culot de réception de l'ampoule et par exemple la dynamo.

On conçoit cependant que ces différents systèmes d'éclairage présentent un certain nombre d'inconvénients.

En effet, ces systèmes d'éclairage présentent des structures relativement complexes, dont le montage nécessite un grand nombre d'opérations, ce qui se traduit par un coût relativement important de ceux-ci.

En effet, le réflecteur et le bras de support sont réalisés séparément, puis assemblés l'un sur l'autre.

De plus, l'ampoule doit être montée dans le réflecteur et les conducteurs correspondants doit être implantés dans le système à partir du culot du réflecteur.

Dans le cas où le système d'éclairage est également équipé de moyens de commande de l'allumage/extinction de l'ampoule, des raccordements supplémentaires sont également à prévoir entre les conducteurs et ces moyens de commande.

Le but de l'invention est donc de résoudre ces problèmes.

A cet effet, l'invention a pour objet un système d'éclairage notamment pour bicyclette, du type comportant des moyens de fixation sur la bicyclette, des moyens formant réflecteur déplaçables angulairement par rapport aux moyens de fixation et des moyens d'éclairage disposés dans les moyens formant réflecteur, caractérisé en ce que les moyens d'éclairage sont portés par les moyens de fixation et en ce que les moyens formant réflecteur sont déplaçables par rapport à ces moyens d'éclairage.

Suivant d'autres caractéristiques de l'invention :
- les moyens formant réflecteur comportent un orifice de passage des moyens d'éclairage, agencé dans un manchon tubulaire de ces moyens formant réflecteur, adapté pour coopérer avec un palier tubulaire complémentaire des moyens de fixation, prévu autour de moyens de réception des moyens d'éclairage de ces moyens de fixation, pour permettre le déplacement des moyens formant réflecteur par rapport aux moyens de fixation et aux moyens d'éclairage ;
- les moyens formant réflecteur et les moyens de fixation comprennent des moyens complémentaires de réglage et de blocage en position des moyens formant réflecteur sur les moyens de fixation ;
- les moyens de réglage et de blocage comprennent un voile des moyens formant réflecteur, muni d'une lumière adaptée pour recevoir une vis engagée dans une colonne cylindrique des moyens de fixation et permettant de serrer les moyens formant réflecteur sur les moyens de fixation ;
- les moyens formant réflecteur comportent une portion de surface de réflexion semi-cylindrique, centrée sur l'axe des moyens d'éclairage ;
- les moyens d'éclairage comprennent une ampoule adaptée pour être engagée dans un culot correspondant des moyens de fixation ;
- les moyens de fixation comprennent un commutateur d'allumage/extinction des moyens d'éclairage.

L'invention sera mieux comprise à la lecture de la description qui va suivre, donnée uniquement à titre d'exemple et faite en se référant aux dessins annexés, sur lesquels :
- la Fig.1 représente une vue de côté d'un système d'éclairage selon l'invention ;
- la Fig.2 représente une vue de côté de moyens de fixation entrant dans la constitution d'un système d'éclairage selon l'invention ;
- la Fig.3 représente une vue de côté de moyens formant réflecteur entrant dans la constitution d'un système d'éclairage selon l'invention ; et
- la Fig.4 représente une vue de face d'un tel réflecteur.

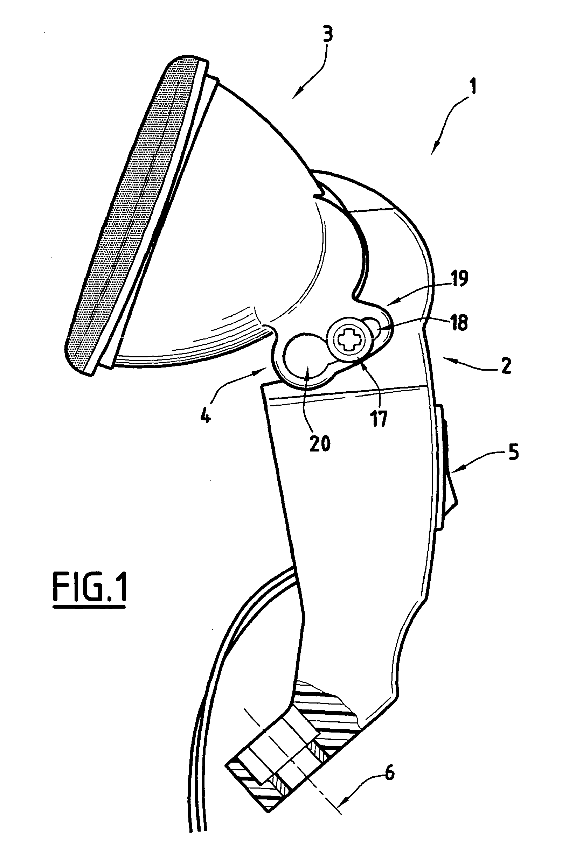

On a en effet illustré sur ces figures, un système d'éclairage notamment pour bicyclette, qui est désigné par la référence générale 1 sur la figure 1.

Ce système comporte des moyens de fixation sur la bicyclette, désignés par la référence générale 2, et qui se présentent par exemple sous la forme d'un bras de support.

Par ailleurs, ce système d'éclairage comporte également des moyens formant réflecteur, désignés par la référence générale 3, déplaçables angulairement par rapport aux moyens de fixation 2, par exemple au niveau d'une zone d'articulation désignée par la référence générale 4.

De façon classique, des moyens d'éclairage sont également disposés dans les moyens formant réflecteur 3.

De façon classique également, ces moyens d'éclairage sont raccordés par exemple à une source d'alimentation en énergie électrique, par exemple à travers des moyens formant commutateur d'allumage/extinction, désignés par la référence générale 5, disposés par exemple sur les moyens de fixation 2.

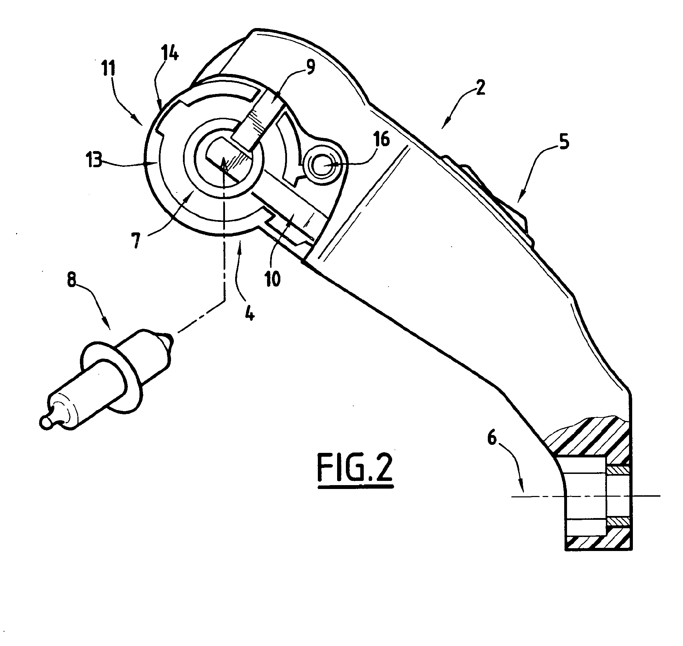

De façon plus spécifique, et comme cela est illustré sur la figure 2, les moyens de fixation 2 comportent à une extrémité des moyens d'accrochage sur la bicyclette, se présentant par exemple sous la forme d'un trou de passage de moyens de vissage ou autres.

Ce trou et ces moyens de vissage sont désignés schématiquement par la référence générale 6 sur cette figure 2.

Bien entendu, d'autres modes de réalisation encore de ces moyens d'accrochage peuvent être envisagés et ceux-ci peuvent par exemple comporter des moyens formant crochet élastique ou autres.

A l'autre extrémité, ces moyens de fixation 2 comprennent des moyens de réception des moyens d'éclairage, ces moyens de réception étant désignés par la référence générale 7 sur cette figure et comprenant par exemple un culot de réception d'une ampoule électrique 8.

De façon classique, des lames élastiques par exemple 9 et 10 sont également utilisées pour assurer l'alimentation en énergie de l'ampoule 8 et s'étendent dans le culot 7.

Les moyens d'éclairage constitués par exemple par l'ampoule 8 sont alors portés par les moyens de fixation 2 et s'étendent alors de façon générale par exemple dans une orientation transversale par rapport à ces moyens de fixation 2.

L'axe des moyens de réception 7 des moyens d'éclairage 8 est en effet par exemple perpendiculaire au plan des moyens de fixation 2.

Par ailleurs, des moyens d'articulation des moyens formant réflecteur 3 autour de ces moyens de réception 7 des moyens d'éclairage 8 sont également prévus.

Ces moyens d'articulation sont désignés par la référence générale 11 sur cette figure 2 et se présentent par exemple sous la forme d'un palier tubulaire des moyens de fixation 2, de réception d'un manchon d'articulation des moyens formant réflecteur 3, qui sera décrit plus en détail par la suite.

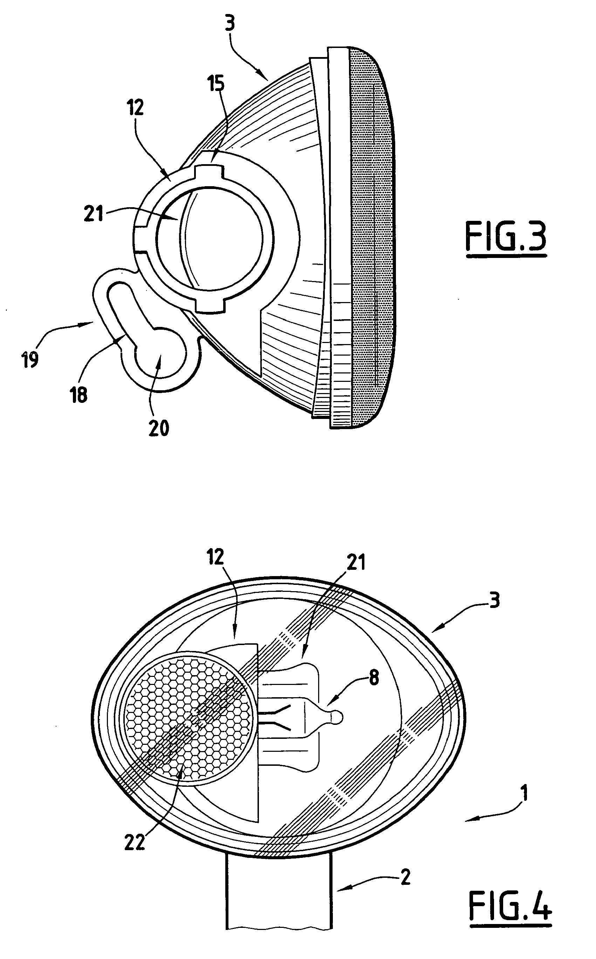

En effet, et comme cela est illustré sur la figure 3, les moyens formant réflecteur désignés par la référence générale 3, comprennent par exemple un manchon d'articulation tubulaire désigné par la référence générale 12, s'étendant latéralement à partir de celui-ci et adapté pour s'engager dans le palier 11 des moyens de fixation 2, autour du culot 7 et de l'ampoule 8, dans la mesure où ce manchon 12 des moyens formant réflecteur 3 est tubulaire et comporte un orifice qui permet, lorsque les moyens formant réflecteur 3 sont montés sur les moyens de fixation 2, à l'ampoule de s'étendre dans le réflecteur, comme cela est illustré sur la figure 4.

Le palier d'articulation 11 des moyens de fixation 2 comporte par exemple un épaulement de butée désigné par la référence générale 13, muni de décrochements par exemple 14, adaptés pour permettre le passage de parties en saillie par exemple 15 du manchon 12 du réflecteur 3 lors du montage et du démontage des moyens formant réflecteur et le maintien de ces moyens formant réflecteur 3, en position sur les moyens de fixation 2, dans les autres positions de ces moyens formant réflecteur.

De plus, des moyens complémentaires de blocage des moyens formant réflecteur sur les moyens de fixation sont également prévus.

Ceux-ci comprennent par exemple une colonne cylindrique 16 (Fig.2) des moyens de fixation 2, adaptée pour recevoir une vis par exemple 17 (Fig.1) déplaçable dans une lumière 18 d'une portion en forme de voile 19 des moyens formant réflecteur 3, cette lumière comportant à une extrémité, une portion élargie 20 permettant le montage et le démontage des moyens formant réflecteur et le passage de la tête de la vis par exemple.

On conçoit alors que les moyens d'éclairage 8 sont portés par les moyens de fixation 2 en étant engagés par exemple dans le culot de réception correspondant 7 de ceux-ci.

Les moyens formant réflecteur 3 sont montés sur ces moyens de fixation 2 et sont déplaçables autour des moyens d'éclairage 8 dans la mesure où ces moyens d'éclairage sont engagés dans les moyens formant réflecteur 3 à travers un orifice d'un manchon latéral de ce réflecteur adapté pour s'engager dans un palier des moyens de fixation.

La position angulaire des moyens formant réflecteur par rapport aux moyens de fixation peut alors être réglée par déplacement angulaire des moyens formant réflecteur et blocage grâce à la vis 17, qui permet de serrer ces moyens formant réflecteur sur les moyens de fixation.

Comme cela a été indiqué précédemment, les moyens formant réflecteur sont alors montés déplaçables angulairement autour de l'ampoule 8.

Dans ce cas, les moyens formant réflecteur comportent une portion de surface de réflexion semi-cylindrique centrée sur l'axe des moyens d'éclairage 8, cette portion de surface étant par exemple désignée par la référence générale 21 sur les figures 3 et 4.

De plus, des moyens formant catadioptre, désignés par la référence générale 22, peuvent également être prévus sur les moyens formant réflecteur.

On conçoit alors qu'une telle structure présente un certain nombre d'avantages, dans la mesure où le montage d'un tel système d'éclairage est extrêmement simple et rapide.

De plus, le raccordement électrique des moyens d'éclairage est simplifié dans la mesure où tous les organes d'alimentation et d'éclairage sont portés par les moyens de fixation 2.

Par ailleurs, les moyens formant réflecteur peuvent également être montés et démontés très facilement sur les moyens de fixation par simple emboîtement/déboîtement.

Bien entendu, d'autres modes de réalisation encore peuvent être envisagés.

## Revendications

1. Système d'éclairage notamment pour bicyclette, du type comportant des moyens de fixation (2) sur la bicyclette, des moyens formant réflecteur (3) déplaçables angulairement par rapport aux moyens de fixation (2) et des moyens (8) d'éclairage disposés dans les moyens formant réflecteur (3), **caractérisé en ce que** les moyens d'éclairage (8) sont portés par les moyens de fixation (2) et **en ce que** les moyens formant réflecteur (3) sont déplaçables par rapport à ces moyens d'éclairage (8).

2. Système selon la revendication 1, **caractérisé en ce que** les moyens formant réflecteur (3) comportent un orifice de passage des moyens d'éclairage (8), agencé dans un manchon tubulaire (12) de ces moyens formant réflecteur, adapté pour coopérer avec un palier tubulaire complémentaire (11) des moyens de fixation (2), prévu autour de moyens de réception (7) des moyens d'éclairage (8) de ces moyens de fixation (2), pour permettre le déplacement des moyens formant réflecteur par rapport aux moyens de fixation (2) et aux moyens d'éclairage (8).

3. Système selon la revendication 2, **caractérisé en ce que** les moyens formant réflecteur (3) et les moyens de fixation (2) comprennent des moyens complémentaires (17, 18, 19, 20) de réglage et de blocage en position des moyens formant réflecteur (3) sur les moyens de fixation (2).

4. Système selon la revendication 3, **caractérisé en ce que** les moyens de réglage et de blocage comprennent un voile (19) des moyens formant réflecteur (3), muni d'une lumière (18) adaptée pour recevoir une vis (17) engagée dans une colonne cylindrique (16) des moyens de fixation (2) et permettant de serrer les moyens formant réflecteur (3) sur les moyens de fixation (2).

5. Système selon l'une quelconque des revendications précédentes, **caractérisé en ce que** les moyens formant réflecteur (3) comportent une portion (21) de surface de réflexion semi-cylindrique, centrée sur l'axe des moyens d'éclairage (8).

6. Système selon l'une quelconque des revendications précédentes, **caractérisé en ce que** les moyens d'éclairage comprennent une ampoule (8) adaptée pour être engagée dans un culot correspondant (7) des moyens de fixation (2).

7. Système selon l'une quelconque des revendications précédentes, **caractérisé en ce que** les moyens de fixation (2) comprennent un commutateur (5) d'allumage/extinction des moyens d'éclairage (8).
